(19) Europäisches Patentamt
European Patent Office
Office européen des brevets

(11) **EP 1 903 203 B1**

(12) **FASCICULE DE BREVET EUROPEEN**

(45) Date de publication et mention
de la délivrance du brevet:
**16.12.2009 Bulletin 2009/51**

(51) Int Cl.:
*F02D 41/22* (2006.01)     *F02B 37/18* (2006.01)
*F02B 37/22* (2006.01)

(21) Numéro de dépôt: **07301196.7**

(22) Date de dépôt: **02.07.2007**

(54) **Disposititf et procédé de détection d'une avarie dans un système de suralimentation en air d'un moteur**

Vorrichtung und Verfahren zur Feststellung einer Panne in einem Luftaufladungssystem eines Motors

Device and method for detecting a failure in a system for supercharging air in an engine

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **06.09.2006 FR 0607804**

(43) Date de publication de la demande:
**26.03.2008 Bulletin 2008/13**

(73) Titulaire: **RENAULT S.A.S.**
**92100 Boulogne Billancourt (FR)**

(72) Inventeur: **Petit, Clément**
**75013, Paris (FR)**

(56) Documents cités:
**EP-A- 1 609 964     DE-A1- 19 625 887**
**JP-A- 7 208 230     US-A1- 2003 084 886**

**Description**

DOMAINE TECHNIQUE GENERAL

L'invention concerne un dispositif de détection d'une avarie dans un système de suralimentation en air d'un moteur à combustion interne de véhicule automobile, le système de suralimentation étant équipé d'un turbocompresseur de suralimentation destiné à accroître la pression d'admission des gaz dans le moteur, et d'une unité de commande électronique, le dispositif comprenant :

- un module de détermination, en continu ou sur un intervalle de temps prédéterminé, de la pression d'admission des gaz du moteur ; et
- un module de calcul apte à calculer une grandeur représentative de la différence entre une pression de consigne et la pression d'admission.

L'invention concerne également un procédé correspondant.

ETAT DE L'ART

La suralimentation en air d'un moteur permet d'augmenter les performances du moteur en admettant une masse d'air plus conséquente pour la combustion du carburant.

Un système de suralimentation comprend généralement un turbocompresseur de suralimentation comprenant un compresseur et une turbine à géométrie variable ayant pour but d'augmenter la quantité d'air admise dans les cylindres du moteur. Le compresseur alimente le moteur en air à une pression supérieure à la pression atmosphérique et la turbine est traversée par les gaz d'échappement issus du moteur.

La puissance fournie par les gaz d'échappement à la turbine peut être modulée en installant une soupape de décharge (ou « waste-gate » selon la terminologie anglaise utilisée par l'homme du métier) ou en prévoyant une turbine munie d'ailettes à orientation variable de façon à constituer un turbocompresseur à géométrie variable (TGV).

Le compresseur est monté sur un axe mécanique recevant également la turbine, de sorte que le compresseur comprime l'air qui entre dans le répartiteur d'admission.

Un échangeur de chaleur peut être placé entre le compresseur et le répartiteur d'admission du moteur afin de refroidir l'air comprimé à la sortie des compresseurs.

Des actionneurs sont utilisés pour piloter l'ouverture et la fermeture des soupapes de décharge ou l'orientation des ailettes de la turbine de façon à modifier la géométrie de ladite turbine.

Le système de suralimentation comprend également une unité de commande électronique fournissant des signaux de commande des actionneurs.

On connaît des systèmes de surveillance de la pression de suralimentation en air d'un moteur à partir d'un signal mesurant la pression dans le collecteur d'admission.

Le turbocompresseur est un élément clé pour garantir la performance et la dépollution des moteurs actuels. Sa défaillance a donc des conséquences directes sur l'agrément du véhicule et la sûreté de fonctionnement. En particulier, un blocage fermé de la commande du turbocompresseur provoque des surpressions dans le circuit d'air à haute pression. Les surpressions peuvent mener à des explosions de l'échangeur de chaleur formant refroidisseur d'air de suralimentation (RAS) et à des survitesses de rotation de turbine qui peuvent mener à des casses du turbocompresseur.

Il est donc crucial de diagnostiquer avec fiabilité ce mode de défaillance pour assurer les prestations du véhicule et permettre des réparations efficaces en après-vente.

Il existe plusieurs techniques de diagnostic pour la détection d'un blocage de la commande du turbocompresseur ou sa non réponse.

JP 11062604 divulgue une première technique de détection du blocage d'un turbocompresseur à géométrie variable en position fermée, en mesurant la différence de gasoil à injecter pour contrer la perte de puissance. Ce critère de diagnostic est éloigné du phénomène physique, car une perte de puissance peut être due à autre chose qu'un turbocompresseur bloqué. De plus, cette technique nécessite un apprentissage pour la détection, et donc implique une lourdeur de calcul.

Le diagnostic le plus répandu est fondé, selon une deuxième technique, sur le dépassement d'un écart de boucle de pression de suralimentation (Pression de consigne - Pression mesurée) pendant un certain temps. Il permet certes de détecter un blocage de la commande, mais sous réserve d'un temps de détection très long, ce qui ne garantit pas une détection à coup sûr en fonction du type de conduite d'un conducteur.

EP 1 624 175 divulgue un diagnostic continu, selon une troisième technique, fondé sur l'intégration de l'écart de boucle de pression de suralimentation au court du temps. Ce diagnostic permet des détections fiables et très rapides, mais n'est pas encore optimal.

Ainsi, un système selon la deuxième technique et la troisième technique comporte un module de détermination et de mesure en continu ou pendant un certain temps de la pression d'admission Pmes des gaz dans le collecteur d'admission du moteur. Il comporte également principalement des moyens de calcul, d'intégration et de comparaison.

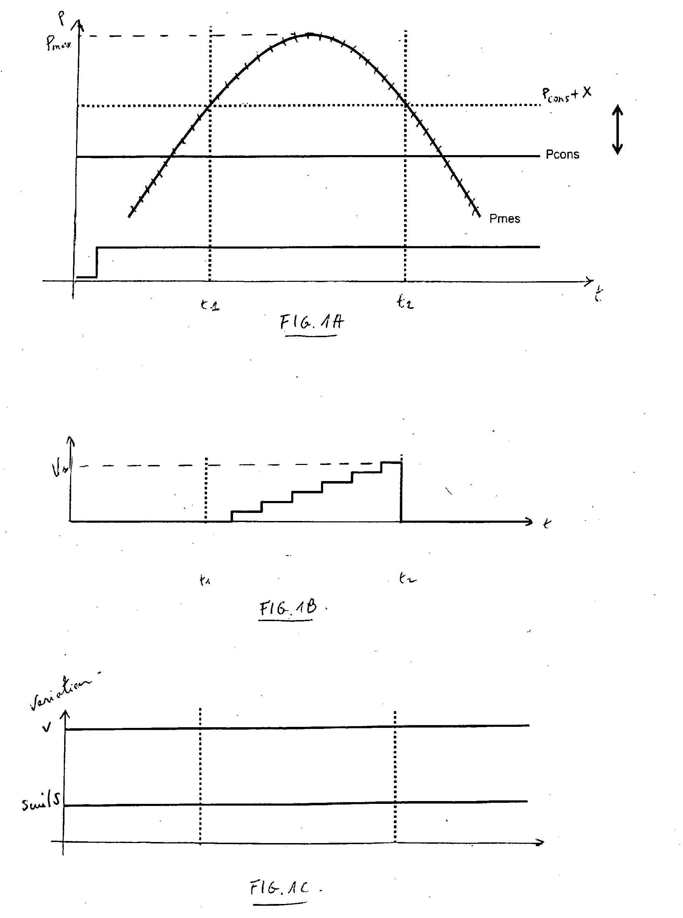

Sur la figure 1A est représenté un exemple de fonctionnement normal du moteur en suralimentation, pour lequel la consigne Pcons de pression d'admission des gaz du moteur est égale à une valeur constante. L'évolution de la pression d'admission Pmes est également représentée, ainsi qu'une horizontale de valeur Pcons+X, X étant une première pression prédéterminée correspondant à un seuil de détection.

Sur cet exemple, la courbe de pression d'admission Pmes passe par une valeur maximale Pmax supérieure à Pcons+X. La pression d'admission Pmes est supérieure à la valeur Pcons+X à partir d'un instant t1, et jusqu'à un instant t2. Ensuite, la pression d'admission Padm décroît, jusqu'à être inférieure à la valeur Pcons, par exemple pour se réguler autour de la pression de consigne Pcons après un certain temps.

Les moyens de calcul sont par exemple capables de calculer la valeur absolue $|\Delta P|$ de la différence $\Delta P$ entre la pression de consigne Pcons et la pression d'admission Pmes. En d'autres termes, on a

$$\Delta P = Pcons - Pmes.$$

Les moyens de calcul calculent en continu un premier écart EX entre la valeur absolue $|\Delta P|$ et la première pression prédéterminée X :

$$EX = |\Delta P| - X.$$

La valeur de EX est représentée sur la figure 1B. Elle vaut 0 lorsque EX<0, et 1 lorsque EX>0.

Selon la deuxième technique, un compteur temporel, représenté à la figure 1C, est enclenché lorsque EX>0 (voir la figure 1B). Lorsque ce compteur atteint une valeur seuil V1, un défaut est détecté.

On voit sur la figure 1C qu'il existe un risque de fausse détection car le compteur peut se rapprocher de la valeur V1, alors qu'une avarie n'est pas présente.

Enfin, selon une quatrième technique appliquée sur un système de suralimentation doté d'un capteur de position, le diagnostic du blocage de la commande est évidemment la mesure de l'écart de boucle de position. Cette technique nécessite cependant la présence d'un capteur de position. Or, l'ajout d'un nouveau capteur, quel qu'il soit, ajoute de la non fiabilité au système et un coût.

PRESENTATION DE L'INVENTION

L'invention propose de pallier ces inconvénients.

A cet effet, on propose selon l'invention un dispositif de détection d'une avarie dans un système de suralimentation en air d'un moteur à combustion interne de véhicule automobile, le système de suralimentation étant équipé d'un turbocompresseur de suralimentation destiné à accroître la pression d'admission des gaz dans le moteur, et d'une unité de commande électronique, le dispositif comprenant :

- un module de détermination, en continu ou sur un intervalle de temps prédéterminé, de la pression d'admission des gaz du moteur ; et
- un module de calcul apte à calculer une grandeur représentative de la différence entre une pression de consigne et la pression d'admission ;

caractérisé en ce qu'il comprend en outre:

- un module de détermination de la variation dans le temps de la grandeur représentative de la différence entre la pression de consigne et la pression d'admission ; et
- un module de comparaison pour comparer ladite variation avec un seuil prédéterminé, et pour détecter une avarie dans le système de suralimentation lorsque ladite variation est inférieure audit seuil.

L'invention est avantageusement complétée par les caractéristiques suivantes, prises seules ou en une quelconque de leur combinaison techniquement possible :

- le dispositif comporte en outre un module de condition de diagnostic permettant la gestion et l'exploitation des résultats des autres modules pour la détection de l'avarie ;
- le module de détermination est un capteur de pression ou un estimateur de pression ;
- le dispositif comporte en outre :

  - un module d'alarme pour prévenir un conducteur du véhicule en cas de détection d'une avarie ; et/ou
  - un module de mémorisation pour stocker un code d'anomalie en cas de détection d'une avarie ; et/ou
  - un module d'activation d'un mode dégradé de limitation de débit de carburant dans le moteur en cas de détection d'une avarie ;

- le dispositif est monté en série ou en parallèle avec un système de surveillance de la pression de suralimentation en air du moteur ;
- le dispositif comporte en outre :

  - un module d'intégration apte à calculer une somme ou une intégrale de la grandeur représentative de la différence entre la pression de consigne et la pression d'admission ;
  - un module de comparaison pour comparer ladite somme ou ladite intégrale avec un autre seuil prédéterminé ;

- le dispositif comporte un module de détermination d'une valeur absolue d'une grandeur ;
- le dispositif comporte en outre un module de comparaison pour comparer la grandeur représentative de la différence avec un autre seuil prédéterminé.

L'invention concerne également un procédé de détection d'une avarie dans un système de suralimentation en air d'un moteur à combustion interne de véhicule automobile, mis en oeuvre sur le dispositif.

L'invention présente de nombreux avantages.

L'invention permet de détecter avec fiabilité le blocage ou la non-réponse d'une chaîne de commande d'un turbocompresseur à soupape de décharge (ou « waste-gate » selon la terminologie anglaise utilisée par l'homme du métier) ou d'un turbocompresseur à géométrie variable (TGV) en position fermée. La détection s'effectue quelle que soit la chaîne de commande, et sans préjuger de l'endroit précis où se situe la défaillance dans la chaîne.

Le critère de diagnostic est proche du phénomène physique : on détecte bien uniquement le blocage du turbocompresseur en position fermée.

De plus, l'invention ne nécessite pas d'apprentissage pour la détection, et n'implique pas de lourdeur de calcul.

Lorsqu'elle est utilisée en tant qu'évolution ou en filtrage de la deuxième technique de l'art antérieur et/ou en complément de vérification de la troisième technique de l'art antérieur, l'invention permet d'améliorer la fiabilité de détection, et d'améliorer en conséquence le temps de détection. En effet, l'application de ce nouveau critère de détection permet d'ignorer les cas nominaux où un écart de boucle est constaté temporairement alors qu'aucune défaillance n'est présente (c'est le cas de toute régulation).

Ainsi selon l'invention, dans le cas d'un fonctionnement normal de la suralimentation, la grandeur $\Delta P$ varie constamment (à la condition que $\Delta P$ soit supérieure à un seuil X). Le critère

$$\frac{d(\Delta P)}{dt}$$

est donc toujours supérieur à un seuil, comme le montre la figure 1D. Un compteur temporel lié à $\Delta P$, et représenté à la figure 1E, n'est pas enclenché. Le risque de fausse détection s'en retrouve en conséquence quasi nul, car la valeur seuil V2 du compteur de la valeur de la figure 1D n'est pas atteinte de façon erronée.

Contrairement à la quatrième technique, l'invention ne nécessite pas de capteur de position, et utilise donc le capteur qui sert déjà à la réalisation du contrôle de la pression de suralimentation, ce qui représente une économie et un gain en fiabilité.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- les figures 1A à 1C, déjà commentées, représentent schématiquement le fonctionnement d'un système de surveillance selon l'art antérieur, avec en figure 1C la valeur d'un compteur temporel en fonction du temps pendant lequel la valeur de la figure 1B est supérieure à 0 ;
- les figures 1D et 1E, représentent schématiquement le fonctionnement d'un système de détection selon l'invention, en lien avec les figures 1A à 1C, avec en figure 1E la valeur d'un compteur temporel en fonction du temps pendant lequel la valeur de la figure 1D est supérieure à 0 ;
- la figure 2 représente schématiquement un exemple possible d'un mode de réalisation d'un dispositif de détection selon l'invention ;
- la figure 3 représente schématiquement un exemple de fonctionnement possible d'un dispositif de détection selon l'invention ;
- les figures 4 et 5 représentent schématiquement des variantes de fonctionnement d'un dispositif de détection selon l'invention ; et
- les figures 6A et 6B représentent schématiquement un montage possible d'un dispositif selon l'invention avec un système de surveillance selon l'art antérieur.

Sur l'ensemble des figures, les éléments similaires portent des références numériques identiques.

DESCRIPTION DETAILEE

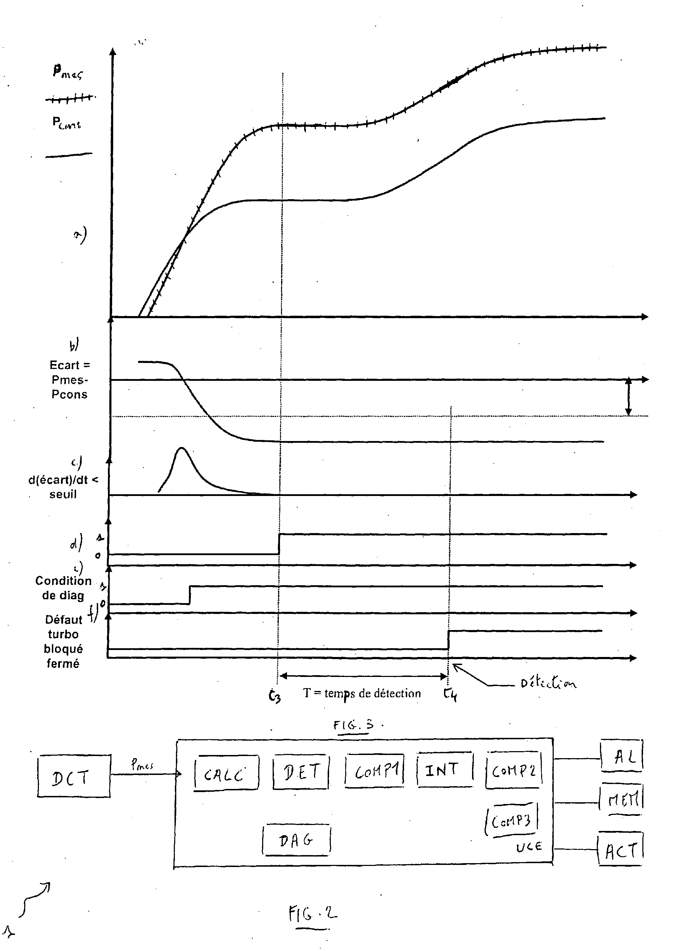

La figure 2 représente schématiquement un exemple possible d'un mode de réalisation d'un dispositif 1 de détection selon l'invention.

On propose ainsi selon l'invention un dispositif de détection d'une avarie dans un système de suralimentation en air d'un moteur à combustion interne de véhicule automobile.

Dans la présente description, on appelle « avarie » un blocage ou une non-réponse d'une chaîne de commande d'un turbocompresseur.

Classiquement en effet, le système de suralimentation est équipé d'un turbocompresseur de suralimentation destiné à accroître la pression d'admission des gaz dans le moteur, et d'une unité de commande électronique UCE commandant une chaîne de commande du turbocompresseur.

Le dispositif comprend principalement un module DCT de détermination, en continu ou sur un intervalle de temps prédéterminé, de la pression d'admission Pmes des gaz du moteur.

Le module DCT est par exemple un capteur de pression ou un estimateur de pression.

Le dispositif comprend en outre un module de calcul CALC apte à calculer une grandeur représentative, par exemple la valeur absolue $|\Delta P|$, de la différence $\Delta P$

entre une pression de consigne Pcons et la pression d'admission Pmes. $\Delta$P est aussi appelée écart de boucle de suralimentation par l'homme du métier.

Cette différence entre Pcons et Pmes va permettre de détecter une avarie.

En effet, et comme le montre la Figure 3a, lorsque la commande du turbocompresseur est bloquée ou qu'elle ne répond plus, on peut observer que la pression mesurée Pmes a le même comportement de variation que la pression de consigne Pcons. On note que Pcons est une grandeur cartographiée en fonction du couple, du régime moteur et des conditions d'environnement, comme par exemple la température de l'air Tair ou la pression atmosphérique Patmo. On en conclut que la variation de la grandeur :

$$\Delta P = Pcons - Pmes$$

est sensiblement nulle en cas d'avarie.

C'est cette condition de stabilité de l'écart de boucle qui est exploitée pour diagnostiquer le blocage de la commande en position fermée.

Ainsi, le dispositif comprend en outre un module DET de détermination de la variation dans le temps de la grandeur représentative de la différence $\Delta$P entre la pression de consigne Pcons et la pression d'admission Pmes.

Il comporte de plus un module COMP1 de comparaison pour comparer ladite variation avec un seuil prédéterminé. COMP1 permet ainsi de détecter une avarie dans le système de suralimentation lorsque ladite variation est inférieure audit seuil.

Le seuil prédéterminé est fixé proche de zéro, en fonction de la sensibilité souhaitée.

Le dispositif comporte en outre un module DAG de condition de diagnostic permettant la gestion et l'exploitation des résultats des autres modules DCT, CALC, DET et COMP1 pour la détection de l'avarie.

Ainsi, comme le montre la figure 3a, lors d'une avarie la pression mesurée, Pmes a le même comportement de variation que la pression de consigne Pcons.

Le module de calcul CALC calcule la grandeur représentative de la différence $\Delta$P entre une pression de consigne Pcons et la pression d'admission Pmes. La figure 3b montre une représentation graphique du calcul de Pmes-Pcons, qui est bien une grandeur représentative de $\Delta$P. On répète que préférentiellement, c'est la grandeur $|\Delta P|$ qui est calculée. On montre également sur la figure 3b qu'un module de comparaison, COMP3 par exemple comme décrit plus en détail dans la suite, détermine si $|\Delta P|$ est supérieure à un seuil, par exemple X. Pour que l'avarie soit détectée, $|\Delta P|$ doit être supérieure à X.

La figure 3c montre que le module DET détermine la de variation dans le temps de la grandeur. Le module DET calcule ainsi par exemple la valeur absolue de la dérivée par rapport au temps de la différence entre Pmes et Pcons.

La figure 3d montre que le module COMP1 compare ladite variation avec le seuil prédéterminé. Sur la figure 3d, COMP1 donne la valeur 0 lorsque la variation est supérieure au seuil, et donne la valeur 1 lorsque la variation est inférieure au seuil. COMP1 retourne la valeur 1 au temps t3.

La figure 3e montre que le module DAG de condition de diagnostic donne la valeur 0 lorsqu'il n'est pas en fonctionnement, et 1 lorsqu'il est en fonctionnement. Dans le cas de la figure 3, le module DAG est en fonctionnement lors de l'avarie.

La figure 3f montre ainsi que l'avarie est détectée au temps t4, puisque les conditions suivantes sont réunies :

- la variation est inférieure au seuil (COMP1 donne la valeur 1),
- les conditions de diagnostic sont vérifiées (DAG donne la valeur 1), et
- $|\Delta P| > X$ (COMP3 donne également un résultat positif - $|\Delta P|$ est supérieure à X).

La détection est effectuée lorsque la variation est inférieure au seuil et que les conditions précitées sont vérifiées pendant un temps T (t4-t3), T évitant ainsi les fausses détections. T est par exemple lié au compteur représenté à la figure 1E.

Le dispositif peut comporter en outre un module AL d'alarme pour prévenir un conducteur du véhicule en cas de détection d'une avarie. L'alarme peut être un voyant lumineux qui est éclairé en cas d'avarie, ou bien un dispositif à synthèse vocale comprenant une ou deux phrases d'alarme synthétisées pour cette avarie.

Le dispositif peut également comporter un module MEM de mémorisation pour stocker un code d'anomalie (ou « Diagnostic Trouble Code » (DTC) selon la terminologie anglaise utilisée par l'homme du métier) en cas de détection d'une avarie. Un tel stockage permet de faire un historique des avaries et d'améliorer l'efficacité des réparations à effectuer par le constructeur par exemple sur le turbocompresseur.

Le dispositif peut également comporter un module ACT d'activation d'un mode dégradé de limitation de débit de carburant dans le moteur en cas de détection d'une avarie.

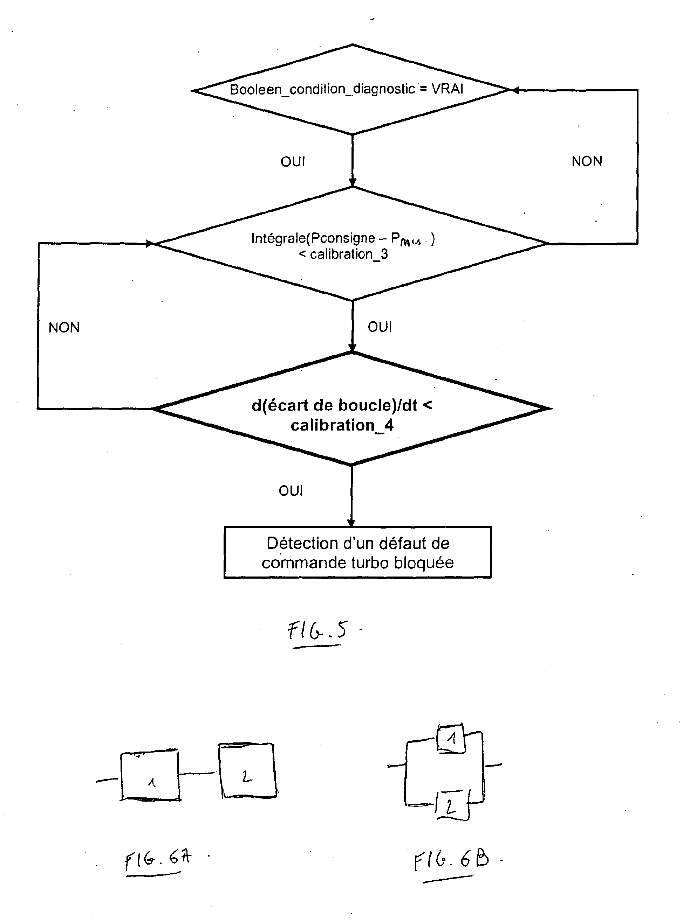

Les figures 6A et 6B montrent qu'un dispositif 1 selon l'invention est avantageusement monté respectivement en série ou en parallèle avec un système 2 de surveillance de la pression de suralimentation en air du moteur.

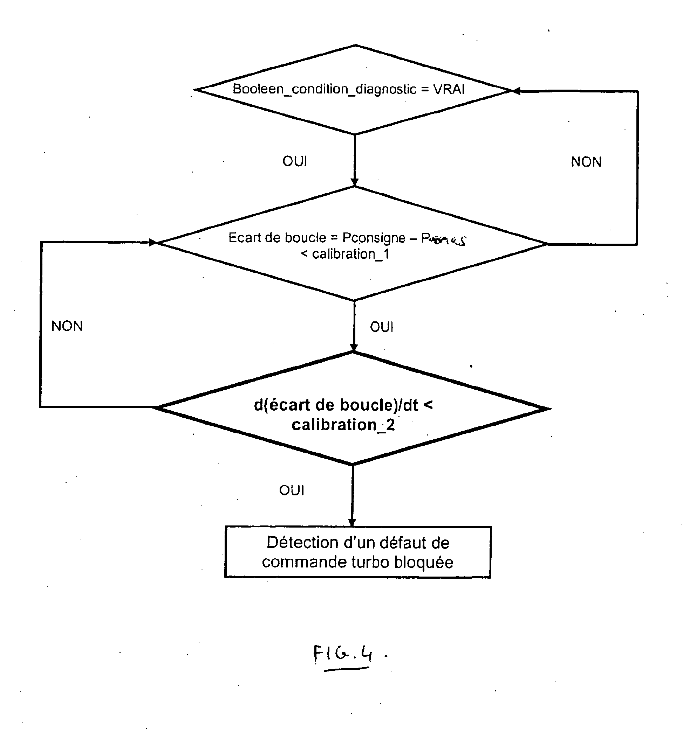

Il peut ainsi être utilisé en tant qu'évolution ou en filtrage de la deuxième technique de l'art antérieur comme le montre la figure 4. Il peut également être utilisé en complément de vérification de la troisième technique de l'art antérieur comme le montre la figure 5.

Pour être utilisé avec la deuxième technique, le dispositif comporte un module COMP3 de comparaison pour comparer la grandeur représentative de la différence ∆P avec un seuil prédéterminé, nommé ici calibration_1 et correspondant par exemple à X dans la figure 3b.

Ainsi et comme le montre la figure 4, si le module DAG est en fonctionnement, le booléen nommé ici « condition_diagnostic » est vrai.

Le module COMP3 compare alors la valeur donnée par le module CALC au seuil calibration_1.

Si l'écart entre la pression de consigne et la pression mesurée est inférieur au seuil calibration_1, alors le module DET détermine sa variation et le module COMP1 compare cette variation au seuil nommé ici calibration_2. Si l'écart est supérieur au seuil calibration_1, on revérifie si le module DAG est en fonctionnement.

Si la variation est inférieure au seuil calibration_2, alors l'avarie est détectée. Sinon, COMP3 recompare la valeur donnée par le module CALC au seuil calibration_1.

La valeur du seuil calibration_2 permet d'effectuer un filtrage et de diminuer les fausses détections.

Pour être utilisé avec la troisième technique, le dispositif comporte un module d'intégration INT apte à calculer une somme ou une intégrale de la différence ∆P entre une pression de consigne Pcons et la pression d'admission Pmes. Le dispositif comporte de plus un module COMP2 de comparaison pour comparer ladite somme ou ladite intégrale avec un seuil prédéterminé.

Ainsi et comme le montre la figure 5, si le module DAG est en fonctionnement, le booléen « condition_diagnostic » est vrai.

Le module COMP2 compare alors la somme ou l'intégrale de la valeur donnée par le module CALC au seuil nommé ici calibration_3.

Si cette somme ou intégrale est supérieure au seuil calibration_3, alors le module DET détermine la variation de l'écart de boucle et le module COMP1 compare cette variation au seuil nommé ici calibration_4. Si la somme ou l'intégrale est inférieure au seuil calibration_3, on revérifie si le module DAG est en fonctionnement.

Si la variation est inférieure au seuil calibration_4, alors l'avarie est détectée. Sinon, COMP2 recompare l'intégrale de la valeur donnée par le module CALC au seuil calibration_3.

La valeur du seuil calibration_4 permet d'effectuer un filtrage et de diminuer les fausses détections.

## Revendications

**1.** Dispositif de détection d'une avarie dans un système de suralimentation en air d'un moteur à combustion interne de véhicule automobile, le système de suralimentation étant équipé d'un turbocompresseur de suralimentation destiné à accroître la pression d'admission des gaz dans le moteur, et d'une unité de commande électronique (UCE), le dispositif comprenant :

- un module (DCT) de détermination, en continu ou sur un intervalle de temps prédéterminé, de la pression d'admission (Pmes) des gaz du moteur ; et
- un module de calcul (CALC) apte à calculer une grandeur représentative ($|\Delta P|$) de la différence ($\Delta P$) entre une pression de consigne (Pcons) et la pression d'admission (Pmes) ;

**caractérisé en ce qu'**il comprend en outre:

- un module (DET) de détermination de la variation dans le temps de la grandeur représentative ($|\Delta P|$) de la différence ($\Delta P$) entre la pression de consigne (Pcons) et la pression d'admission (Pmes) ; et
- un module (COMP1) de comparaison pour comparer ladite variation avec un seuil prédéterminé (calibration_2 ; calibration_4), et pour détecter une avarie dans le système de suralimentation lorsque ladite variation est inférieure audit seuil.

**2.** Dispositif selon la revendication 1, comportant en outre un module (DAG) de condition de diagnostic permettant la gestion et l'exploitation des résultats des autres modules (DCT, CALC, DET, COMP1) pour la détection de l'avarie.

**3.** Dispositif selon l'une des revendications 1 ou 2, dans lequel le module de détermination est un capteur de pression ou un estimateur de pression.

**4.** Dispositif selon l'une des revendications 1 à 3, comportant en outre :

- un module (AL) d'alarme pour prévenir un conducteur du véhicule en cas de détection d'une avarie ; et/ou
- un module (MEM) de mémorisation pour stocker un code d'anomalie en cas de détection d'une avarie ; et/ou
- un module (ACT) d'activation d'un mode dégradé de limitation de débit de carburant dans le moteur en cas de détection d'une avarie.

**5.** Dispositif selon l'une des revendications 1 à 4, monté en série ou en parallèle avec un système de surveillance de la pression de suralimentation en air du moteur.

**6.** Dispositif selon la revendication 5, comportant en outre

- un module d'intégration (INT) apte à calculer une somme ou une intégrale de la grandeur représentative de la différence (ΔP) entre la pression de consigne (Pcons) et la pression d'admission (Pmes) ;
- un module (COMP2) de comparaison pour comparer ladite somme ou ladite intégrale avec un autre seuil prédéterminé (calibration_3).

7. Dispositif selon la revendication 5, comportant en outre un module (COMP3) de comparaison pour comparer la grandeur représentative de la différence (ΔP) avec un autre seuil prédéterminé (calibration_1).

8. Dispositif selon l'une des revendications 1 à 7, dans lequel au moins un des modules est aptes à calculer une valeur absolue d'une grandeur.

9. Procédé de détection d'une avarie dans un système de suralimentation en air d'un moteur à combustion interne de véhicule automobile, le système de suralimentation étant équipé d'un turbocompresseur de suralimentation destiné à accroître la pression d'admission des gaz dans le moteur, et d'une unité de commande électronique (UCE), le procédé comprenant :

    - une étape de détermination, en continu ou sur un intervalle de temps prédéterminé, de la pression d'admission (Pmes) des gaz du moteur, grâce à un module (DCT) de détermination ; et
    - une étape de calcul d'une grandeur représentative de la différence (ΔP) entre une pression de consigne (Pcons) et la pression d'admission (Pmes), grâce à un module de calcul (CALC) ;

**caractérisé en ce qu'**il comprend en outre:

    - une étape de détermination de la variation dans le temps de la grandeur représentative de la différence (ΔP) entre la pression de consigne (Pcons) et la pression d'admission (Pmes), grâce à un module (DET) de détermination ;
    - une étape de comparaison de ladite variation avec un seuil prédéterminé (calibration_2 ; calibration_4) grâce à un module (COMP1) de comparaison, et
    - une étape de détection d'une avarie dans le système de suralimentation lorsque ladite variation est inférieure audit seuil.

10. Procédé selon la revendication 9,_comportant en outre une étape de calcul d'une somme ou d'une intégrale de la grandeur représentative de la différence (ΔP) entre la pression de consigne (Pcons) et la pression d'admission (Pmes) grâce à un module d'intégration (INT), et une étape de comparaison de ladite somme ou de ladite intégrale avec un autre seuil prédéterminé (calibration_3) grâce à un module (COMP2) de comparaison, la détection de l'avarie ayant lieu respectivement lorsque ladite variation est inférieure au seuil (calibration_4) de détection, et ladite somme ou ladite intégrale est supérieure à l'autre seuil (calibration_3).

11. Procédé selon la revendication 9, comportant en outre une étape de calcul de la grandeur représentative de la différence entre la pression de consigne (Pcons) et la pression d'admission (Pmes) grâce à un module de calcul (CALC), et une étape de comparaison de ladite grandeur avec un autre seuil prédéterminé (calibration_1) grâce à un module (COMP3) de comparaison, la détection de l'avarie ayant lieu respectivement lorsque ladite variation est inférieure au seuil (calibration_2) de détection, et ladite grandeur est inférieure à l'autre seuil (calibration_1).

12. Procédé selon l'une des revendications 9 à 11, comportant en outre :

    - une étape d'alarme pour prévenir un conducteur du véhicule en cas de détection d'une avarie, grâce à un module (AL) d'alarme ; et/ou
    - une étape de stockage d'un code d'anomalie en cas de détection d'une avarie grâce à un module (MEM) de mémorisation ; et/ou
    - une étape d'activation d'un mode dégradé de limitation de débit de carburant dans le moteur en cas de détection d'une avarie, grâce à un module (ACT) d'activation.

13. Procédé selon l'une des revendications 9 à 12, effectué simultanément ou successivement avec un procédé de surveillance de la pression de suralimentation en air du moteur.

**Claims**

1. Device for detecting a fault in an air-boost system of an internal combustion engine of a motor vehicle, the boost system being fitted with a boosting turbocharger designed to increase the pressure of intake of the gases into the engine, and with an electronic control unit (ECU), the device comprising:

    - a module (DCT) for determining, continuously or over a predetermined period of time, the intake pressure (Pmes) of the engine gases; and
    - a computing module (CALC) capable of computing a magnitude (|ΔP|) representative of the difference (ΔP) between a setpoint pressure (Pcons) and the intake pressure (Pmes);

**characterized in that** it also comprises:

- a module (DET) for determining the variation over time of the magnitude (|ΔP|) representative of the difference (ΔP) between the setpoint pressure (Pcons) and the intake pressure (Pmes); and

- a comparison module (COMP1) for comparing the said variation with a predetermined threshold (calibration_2; calibration_4), and for detecting a fault in the boost system when the said variation is below the said threshold.

2. Device according to Claim 1, also comprising a diagnostic condition module (DAG) allowing the management and use of the results of the other modules (DCT, CALC, DET, COMP1) for the detection of the fault.

3. Device according to one of Claims 1 or 2, in which the determination module is a pressure sensor or a pressure estimator.

4. Device according to one of Claims 1 to 3, also comprising:

- an alarm module (AL) for warning a driver of the vehicle if a fault is detected; and/or
- a storage module (MEM) for storing an anomaly code if a fault is detected; and/or
- a module (ACT) for activating a degraded mode for limiting the flow of fuel in the engine if a fault is detected.

5. Device according to one of Claims 1 to 4, mounted in series or in parallel with a system for monitoring the air boost pressure of the engine.

6. Device according to Claim 5, also comprising

- an integration module (INT) capable of computing a sum or an integral of the magnitude representative of the difference (ΔP) between the setpoint pressure (Pcons) and the intake pressure (Pmes);
- a comparison module (COMP2) for comparing the said sum or the said integral with another predetermined threshold (calibration_3).

7. Device according to Claim 5, also comprising a comparison module (COMP3) for comparing the magnitude representative of the difference (ΔP) with another predetermined threshold (calibration_1) .

8. Device according to one of Claims 1 to 7, in which at least one of the modules is capable of computing an absolute value of a magnitude.

9. Method for detecting a fault in an air boost system of an internal combustion engine of a motor vehicle, the boost system being fitted with a boosting turbocharger designed to increase the pressure of intake of the gases into the engine, and with an electronic control unit (ECU), the method comprising:

- a step of determining, continuously or over a predetermined period of time, the intake pressure (Pmes) of the engine gases, by virtue of a determination module (DCT); and
- a step of computing a magnitude representative of the difference (ΔP) between a setpoint pressure (Pcons) and the intake pressure (Pmes), by virtue of a computing module (CALC);

**characterized in that** it also comprises:

- a step of determining the variation over time in the magnitude representative of the difference (ΔP) between the setpoint pressure (Pcons) and the intake pressure (Pmes), by virtue of a determination module (DET);
- a step of comparing the said variation with a predetermined threshold (calibration 2; calibration_4) by virtue of a comparison module (COMP1) , and
- a step of detecting a fault in the boost system when the said variation is below the said threshold.

10. Method according to Claim 9, also comprising a step of computing a sum or an integral of the magnitude representative of the difference (ΔP) between the setpoint pressure (Pcons) and the intake pressure (Pmes) by virtue of an integration module (INT), and a step of comparing the said sum or the said integral with another predetermined threshold (calibration_3) by virtue of a comparison module (COMP2), the detection of the fault taking place respectively when the said variation is below the detection threshold (calibration_4), and the said sum or the said integral is above the other threshold (calibration_3) .

11. Method according to Claim 9, also comprising a step of computing the magnitude representative of the difference between the setpoint pressure (Pcons) and the intake pressure (Pmes) by virtue of a computing module (CALC), and a step of comparing the said magnitude with another predetermined threshold (calibration_1) by virtue of a comparison module (COMP3), the detection of the fault taking place respectively when the said variation is below the detection threshold (calibration_2), and the said magnitude is below the other threshold (calibration_1).

12. Method according to one of Claims 9 to 11, also comprising:

- an alarm step for warning a driver of the vehicle if a fault is detected, by virtue of an alarm module (AL); and/or
- a step of storing an anomaly code if a fault is detected, by virtue of a storage module (MEM); and/or
- a step of activating a degraded mode for limiting the flow of fuel in the engine if a fault is detected, by virtue of an activation module (ACT).

13. Method according to one of Claims 9 to 12, carried out simultaneously or successively with a method of monitoring the air boost pressure of the engine.

**Patentansprüche**

1. Vorrichtung zur Erfassung einer Panne in einem Luftaufladesystem eines Verbrennungsmotors eines Kraftfahrzeugs, wobei das Aufladesystem mit einem Turbolader, der dazu bestimmt ist, den Ladedruck der Gase in den Motor zu erhöhen, und mit einer elektronischen Steuereinheit (UCE) ausgestattet ist, wobei die Vorrichtung enthält:

- ein Modul (DCT) zur Bestimmung, kontinuierlich oder in einem vorbestimmten Zeitintervall, des Ladedrucks (Pmes) der Gase des Motors; und
- ein Rechenmodul (CALC), das eine für die Differenz (ΔP) zwischen einem Solldruck (Pcons) und dem Ladedruck (Pmes) repräsentative Größe (|ΔP|) berechnen kann,

**dadurch gekennzeichnet, dass** sie außerdem enthält:

- ein Modul (DET) zur Bestimmung der zeitlichen Änderung der für die Differenz (ΔP) zwischen dem Solldruck (Pcons) und dem Ladedruck (Pmes) repräsentativen Größe (|ΔP|), und
- ein Vergleichsmodul (COMP1), um die Änderung mit einem vorbestimmten Schwellwert (Kalibrierung_2; Kalibrierung_4) zu vergleichen, und um eine Panne im Aufladesystem zu erfassen, wenn die Änderung unter dem Schwellwert liegt.

2. Vorrichtung nach Anspruch 1, die außerdem ein Modul (DAG) der Diagnosebedingung aufweist, das die Verwaltung und die Auswertung der Ergebnisse der anderen Module (DCT, CALC, DET, COMP1) zur Erfassung der Panne ermöglicht.

3. Vorrichtung nach einem der Ansprüche 1 oder 2, bei der das Bestimmungsmodul ein Drucksensor oder ein Druckschätzer ist.

4. Vorrichtung nach einem der Ansprüche 1 bis 3, die außerdem aufweist:

- ein Alarmmodul (AL), um einen Fahrer des Fahrzeugs im Fall der Erfassung einer Panne zu warnen; und/oder
- ein Speichermodul (MEM), um im Fall der Erfassung einer Panne einen Fehlercode zu speichern; und/oder
- ein Aktivierungsmodul (ACT) eines Notbetriebs der Beschränkung der Treibstoffzufuhr in den Motor im Fall der Erfassung einer Panne.

5. Vorrichtung nach einem der Ansprüche 1 bis 4, die mit einem Überwachungssystem des Luftaufladedrucks des Motors in Reihe oder parallel geschaltet ist.

6. Vorrichtung nach Anspruch 5, die außerdem aufweist:

- ein Integrationsmodul (INT), das eine Summe oder ein Integral der für die Differenz (ΔP) zwischen dem Solldruck (Pcons) und dem Ladedruck (Pmes) repräsentativen Größe berechnen kann;
- ein Vergleichsmodul (COMP2), um die Summe oder das Integral mit einem anderen vorbestimmten Schwellwert (Kalibrierung_3) zu vergleichen.

7. Vorrichtung nach Anspruch 5, die außerdem ein Vergleichsmodul (COMP3) aufweist, um die für die Differenz (ΔP) repräsentative Größe mit einem anderen vorbestimmten Schwellwert (Kalibrierung_1) zu vergleichen.

8. Vorrichtung nach einem der Ansprüche 1 bis 7, bei der mindestens eines der Module einen Absolutwert einer Größe berechnen kann.

9. Verfahren zur Erfassung einer Panne in einem Luftaufladesystem eines Verbrennungsmotors eines Kraftfahrzeugs, wobei das Aufladesystem mit einem Turbolader, der dazu bestimmt ist, den Ladedruck der Gase in den Motor zu erhöhen, und mit einer elektronischen Steuereinheit (UCE) ausgestattet ist, wobei das Verfahren enthält:

- einen Schritt der Bestimmung, kontinuierlich oder in einem vorbestimmten Zeitintervall, des Ladedrucks (Pmes) der Gase des Motors durch ein Bestimmungsmodul (DCT); und
- einen Schritt der Berechnung einer für die Differenz (ΔP) zwischen einem Solldruck (Pcons) und dem Ladedruck (Pmes) repräsentativen Größe durch ein Rechenmodul (CALC);

**dadurch gekennzeichnet, dass** es außerdem enthält:

- einen Schritt der Bestimmung der zeitlichen Änderung der für die Differenz (ΔP) zwischen dem Solldruck (Pcons) und dem Ladedruck (Pmes) repräsentativen Größe durch ein Bestimmungsmodul (DET);
- einen Schritt des Vergleichs der Änderung mit einem vorbestimmten Schwellwert (Kalibrierung_2; Kalibrierung_4) durch ein Vergleichsmodul (COMP1), und
- einen Schritt der Erfassung einer Panne in dem Aufladesystem, wenn die Änderung unter dem Schwellwert liegt.

10. Verfahren nach Anspruch 9, das außerdem einen Schritt der Berechnung einer Summe oder eines Integrals der für die Differenz (ΔP) zwischen dem Solldruck (Pcons) und dem Ladedruck (Pmes) repräsentativen Größe durch ein Integrationsmodul (INT) und einen Schritt des Vergleichs der Summe oder des Integrals mit einem anderen vorbestimmten Schwellwert (Kalibrierung_3) durch ein Vergleichsmodul (COMP2) aufweist, wobei die Erfassung der Panne erfolgt, wenn die Änderung unter dem Erfassungsschwellwert (Kalibrierung_4) liegt, bzw. die Summe oder das Integral höher als der andere Schwellwert (Kalibrierung_3) ist.

11. Verfahren nach Anspruch 9, das außerdem einen Schritt der Berechnung der für die Differenz zwischen dem Solldruck (Pcons) und dem Ladedruck (Pmes) repräsentativen Größe durch ein Rechenmodul (CALC) und einen Schritt des Vergleichs der Größe mit einem anderen vorbestimmten Schwellwert (Kalibrierung 1) durch ein Vergleichsmodul (COMP3) aufweist, wobei die Erfassung der Panne erfolgt, wenn die Änderung unter dem Erfassungsschwellwert (Kalibrierung_2) liegt, bzw. die Größe unter dem anderen Schwellwert (Kalibrierung_1) liegt.

12. Verfahren nach einem der Ansprüche 9 bis 11, das außerdem aufweist:

- einen Alarmschritt durch ein Alarmmodul (AL), um einen Fahrer des Fahrzeugs im Fall der Erfassung einer Panne zu warnen; und/oder
- einen Schritt des Speicherns eines Fehlercodes im Fall der Erfassung einer Panne durch ein Speichermodul (MEM); und/oder
- einen Schritt der Aktivierung eines Notbetriebs der Beschränkung der Treibstoffzufuhr in den Motor im Fall der Erfassung einer Panne durch ein Aktivierungsmodul (ACT).

13. Verfahren nach einem der Ansprüche 9 bis 12, das gleichzeitig oder nacheinander mit einem Überwachungsverfahren des Luftaufladedrucks des Motors durchgeführt wird.

P

$P_{max}$

$P_{cons} + X$

Pcons

Pmes

$t_1$    $t_2$    t

FIG. 1A

$V_v$

$t_1$    $t_2$    t

FIG. 1B

variation

V

seuil S

FIG. 1C

$P_{mes}$
++++++

$P_{cons}$
_____

a)

b)
Ecart =
Pmes-
Pcons

c)
d(écart)/dt <
seuil

d)

e)
Condition
de diag

Défaut f)
turbo
bloqué
fermé

$t_3$     T = temps de détection     $t_4$

Détection

FIG. 3

| DCT | $P_{mes}$ | CALC | DET | COMP1 | INT | COMP2 | AL |
|-----|-----------|------|-----|-------|-----|-------|-----|

COMP3

MEM

DAG

UCE

ACT

FIG. 2

12

Booleen_condition_diagnostic = VRAI

OUI

NON

Ecart de boucle = Pconsigne – P$_{mes}$
< calibration_1

NON

OUI

**d(écart de boucle)/dt <
calibration_2**

OUI

Détection d'un défaut de
commande turbo bloquée

FIG. 4 .

Booleen_condition_diagnostic = VRAI

OUI                                          NON

Intégrale(Pconsigne – P$_{m}$ )
< calibration_3

NON                              OUI

**d(écart de boucle)/dt <
calibration_4**

OUI

Détection d'un défaut de
commande turbo bloquée

FIG.5

FIG. 6A

FIG. 6B

**EP 1 903 203 B1**

**RÉFÉRENCES CITÉES DANS LA DESCRIPTION**

**Documents brevets cités dans la description**

- JP 11062604 B

- EP 1624175 A